Europäisches Patentamt

European Patent Office

Office européen des brevets

(11) Veröffentlichungsnummer: **0 381 006**
**A2**

# (12) EUROPÄISCHE PATENTANMELDUNG

(21) Anmeldenummer: **90101250.0**

(22) Anmeldetag: **23.01.90**

(51) Int. Cl.5: **F21S 13/12**

(30) Priorität: **23.01.89 DE 3901836**
**20.04.89 DE 3912913**

(43) Veröffentlichungstag der Anmeldung:
**08.08.90 Patentblatt 90/32**

(84) Benannte Vertragsstaaten:
**CH DE FR GB IT LI NL SE**

(71) Anmelder: **Schirneker, Hans-Ludwig**
**Engelslit 10**
**D-4773 Möhnesee-Völlinghausen(DE)**

(72) Erfinder: **Schirneker, Hans-Ludwig**
**Engelslit 10**
**D-4773 Möhnesee-Völlinghausen(DE)**

(74) Vertreter: **Türk, Gille, Hrabal**
**Brucknerstrasse 20**
**D-4000 Düsseldorf 13(DE)**

(54) **Leuchte, insbesondere Tischleuchte.**

(57) Es ist eine Leuchte offenbart, die einen Halter (81), eine an dem Halter angebrachte Lichtquelle (82) und einen Schirm für die Lichtquelle aufweist. Der Schirm ist eine lösbar auf den Halter aufsetzbare, die mit offener Flamme brennende Lichtquelle umschließende Hülle (90). Die Hülle hat eine Wand (91), die Öffnungen enthält und aus Fadenmaterial gewirkt, gehäkelt, geflochten oder gewebt und flammfestes und hochtemperaturbeständiges Material ist. Die Öffnungen sind auf der gesamten Länge bzw. Höhe der Hülle vorgesehen.

FIG.17

EP 0 381 006 A2

## Leuchte, insbesondere Tischleuchte

Die Erfindung betrifft eine Leuchte und insbesondere eine Tischleuchte, welche einen Halter, eine an diesem Halter angebrachte Lichtquelle und einen Schirm für die Lichtquelle aufweist.

Leuchten dieser Art, beispielsweise Windlichte, haben als Schirm einen auf den als Untersatz ausgebildeten Halter aufgesetzten Glaskörper, der eine als Lichtquelle dienende Kerze gegen Windzug schützt. Da der Glaskörper die von der brennenden Kerze abgestrahlte Wärme reflektiert und die Luftbewegung innerhalb des Glaskörpers schwach ist, taut in der Regel das Wachs der brennenden Kerze stark an, was zu einem vorzeitigen Abfließen des geschmolzenen Wachses und zu einem schnellen Abbrand der Kerze führt. Hinzu kommt, daß der Glaskörper dieser bekannten Windlichte relativ teuer ist. Windlichte werden vorwiegend im Freien benutzt, wo Wert darauf gelegt wird, daß eine Kerze von dem dort im allgemeinen herrschenden Luftzug nicht ausgeblasen werden kann.

Andererseits sind hohlbrennende Kerzen bekannt, bei denen Wachs, Docht und Durchmesser so aufeinander abgestimmt sind, daß die Kerze mehr oder weniger nur im Zentrum abbrennt und dementsprechend eine Hülle aus Wachs stehen bleibt. Die Verbrennung derartiger Kerzen ist schlecht, weil die zur Verbrennung notwendige Luft nur durch die obere Öffnung der Kerze zufließen kann. Dadurch ergibt sich eine unruhig flackernde Flamme, die viel Ruß abgibt.

Handelsübliche Kerzen mit einem in einen Wachskörper eingezogenen Docht brennen von oben nach unten ab, wobei das Wachs an der Oberfläche der Kerze antaut. Je dünner bzw. schmaler bei solchen Kerzen der Wachskörper und je ruhiger die Luft im Raum ist, umso besser und störungsfreier brennen die Kerzen ab und umso geringer ist der bei der Verbrennung anfallende Rußanteil. Da aber selbst in einem geschlossenen Raum eine gewisse Luftbewegung stattfindet, enthalten die Abgase derartiger Kerzen stets einen immer noch beträchtlichen Anteil Ruß, der gesundheitsschädlich ist und die Wände der Räume und die Einrichtungsgegenstände auf die Dauer mit einem grauen Schleier überzieht. Ein weiterer Nachteil von Kerzen besteht darin, daß die Oft mit viel Aufwand und künstlerisch gestaltete Oberfläche der Kerze mit verbrennt, so daß das Aussehen derartiger Kerzen nach einer gewissen Brennzeit, selbst wenn sie nicht angezündet sind, stark gestört ist. Hinzu kommt, daß das Volumen derartiger Kerzen mit dem Abbrand geringer wird, so daß die Kerzen immer weniger gefällig aussehen.

Schließlich sind auch Kerzen bekannt, die eine farbige Flamme entwickeln. Die Färbung der Flamme ist jedoch nur sehr schwach. Auch entstehen beim Abbrand unangenehme Gerüche und Düfte.

Aufgabe der Erfindung ist es, eine Leuchte und insbesondere eine Tischleuchte zu schaffen, bei der die mit offener Flamme brennende Lichtquelle und insbesondere eine als Lichtquelle dienende Kerze weitgehend rußfrei brennt und unabhängig vom Abbrand der Lichtquelle den Eindruck vermittelt, als ob eine offene Lichtquelle wie eine Kerze brennt, ohne dabei kürzer zu werden.

Diese Aufgabe wird erfindungsgemäß mit einer Leuchte der eingangs genannten Gattung gelöst, welche die Merkmale des kennzeichnenden Teils von Patentanspruch 1 aufweist. Vorteilhafte Ausgestaltungen der Erfindung sind Gegenstand der Unteransprüche.

Die Erfindung sieht ein zu einer beispielsweise zylindrischen Hülle geformtes möglichst feinmaschiges nicht brennbares Gitter vor, das vorzugsweise aus unversponnener Glasseide oder unversponnener Glaswolle, bei denen die einzelnen Fasern unverzwirnt nebeneinander liegen, geformt, vorzugsweise gewirkt, gehäkelt, geflochten oder gewebt ist und das zweckmäßigerweise nach dem Herstellen des Gitters durch eine feuerfeste Ausrüstung versteift ist. Die aus einem im Betrieb der Leuchte sozusagen leuchtenden oder strahlenden Gitter gebildete Hülle nimmt in sich eine Lichtquelle wie eine mit offener Flamme brennende Kerze auf, wobei die Kerze im unteren Teil auch dicker gehalten sein kann als der Durchmesser bzw. der freie Grundriß der Hülle. Im letztgenannten Falle wird die Hülle nicht unmittelbar auf den Halter aufgesteckt, sondern kann mit ihrem unteren Ende auch auf dem dickeren Teil der Kerze aufsitzen und daher mit der Kerze eine Einheit bilden. Das im Betrieb leuchtende Gitter der Hülle kann auch dekorativ und farbig ausgebildet sein und läßt sich immer wieder verwenden, da es durch die Flammen der Lichtquelle weder beschädigt noch gar verbrannt wird.

Da durch die gitterartige Wand der die Lichtquelle umgebenden Hülle eine gleichmäßige Luftzufuhr auch von unten und von der Seite gewährleistet ist, brennt die Flamme der Lichtquelle wie beispielsweise einer Kerze gleichmäßig, d.h. es wird ein Flackern und Züngeln der Flamme praktisch vollständig verhindert. Dies führt zu einer sauberen und rußfreien Verbrennung. Durch die Größe der Öffnungen, beispielsweise die Maschenweite der gitterartigen Wand der Hülle, und auch durch die Höhe der Hülle selbst kann die Luftzufuhr in das Innere der Hülle bestimmt oder gar gesteuert werden.

Das Gitter der Wand der die Flamme der Lichtquelle umgebenden Hülle nimmt die von der Flamme ausgehenden Lichtstrahlen zum Teil auf, läßt sie zum Teil durch und reflektiert sie zu einem weiteren Teil, so daß insgesamt der Eindruck einer leuchtenden Hülle entsteht, wenn die Flamme brennt. Besonders augenfällig ist bei der erfindungsgemäßen Leuchte, daß die Flamme als solche nicht besonders auffällig sichtbar ist, sondern daß die gitterartige Hülle selbst insgesamt leuchtet, und zwar über ihre gesamte Höhe und ihren gesamten Umfang mehr oder weniger gleichmäßig, ähnlich wie dies bei einer elektrischen Glühbirne mit mattweißem durchscheinenden Glaskolben der Fall ist.

Sowohl die Lichtquelle wie eine Kerze als auch die diese umschließende Hülle können auf einem gemeinsamen Untersatz, hier Halter genannt, angeordnet werden, der beispielsweise aus Metall, Kunststoff oder Keramik besteht. Die Kerze kann dabei auf einen am Halter angebrachten Dorn aufgesteckt oder in eine Öffnung des Halters eingesetzt werden. Die gitterartige Hülle wird in diesem Falle auf den Halter oder Untersatz so aufgesteckt, daß sie die Kerze umgibt, wobei der Außendurchmesser der Kerze dem Innendurchmesser der Hülle angepaßt sein kann und somit Kerze und Hülle gemeinsam auf den Halter aufgesteckt werden. Vorzugsweise weist jedoch die Hülle einen größeren Innendurchmesser als der Außendurchmesser der Lichtquelle wie einer Kerze auf, so daß das von der brennenden Flamme der Lichtquelle ausgehende Licht die Hülle auf deren gesamter Höhe erleuchten kann. Beim Abbrand der Kerze eventuell abtropfendes Wachs kann von dem Halter für Kerze und Hülle aufgefangen werden, so daß kein zusätzlicher Kerzenhalter notwendig ist.

Die Hülle kann im Grundriß und auch im Längsschnitt profiliert, teilweise profiliert oder aber völlig zylindrisch und in den verschiedensten Größen hergestellt sein. Auch ist eine konische oder kegelförmige Ausbildung möglich, ebenso wie alle anderen Formen von Hohlkörpern, die eine dekorative Ausgestaltung aufweisen oder ermöglichen, denkbar sind.

An den beiden Enden der Hülle kann eine starre, ringförmige Fassung vorgesehen sein, wobei am oberen Ende der Hülle an dieser Fassung ein Ringbehälter aus Metall, Keramik od. dgl. angebracht werden kann, der beispielsweise mit Glaswolle gefüllt ist. Die Glaswolle kann einige Tropfen Duftstoff enthalten, der durch die von der brennenden Lichtquelle abgegebene Wärme nach und nach verdunstet. Statt eines Duftstoffes kann die Glaswolle auch mit Insektenbekämpfungsmittel getränkt sein.

Mittels der am oberen Ende der Hülle befindlichen ringförmigen Fassung kann auf die erfindungsgemäße Leuchte auch ein Kerzenspiel oder ein Rotationskörper aufgesetzt werden, beispielsweise in der Weihnachtszeit, welches bzw. welche durch in der gitterförmigen Hülle aufsteigende Luft über schräggestellte Leitflügel nach Art einer rotierenden Mühle angetrieben wird. Auch kann man die Hülle auf der Außenseite als Adventskalender oder Weihnachtskalender mit einzeln zu öffnenden kleinen Fenstern ausbilden.

Obwohl in einer ersten Grundausstattung die Lichtquelle der erfindungsgemäßen Leuchte eine mit offener Flamme brennende handelsübliche Kerze sein kann, kann man als Lichtquelle auch ein handelsübliches oder ein modifiziertes Teelicht, einen Petroleumbrenner oder eine Öllampe innerhalb der als Leuchtgitter ausgebildeten Hülle anordnen. Auch bei Verwendung derartiger mit offener Flamme brennender Lichtquellen vermittelt die erfindungsgemäße Leuchte den Eindruck, daß die in ihr untergebrachte Lichtquelle eine Kerze ist, insbesondere wenn die aus dem Leuchtgitter gebildete Hülle im Grundriß zylindrisch oder konisch ist.

Eine Besonderheit der erfindungsgemäßen Leuchte liegt darin, daß sich im Betrieb das Aussehen der Leuchte nicht in Abhängigkeit vom Abbrand der darin untergebrachten Kerze ändert. Vielmehr leuchtet das Gitter der Hülle stets mehr oder weniger gleichförmig, selbst bei weitgehend abgebrannter Kerze oder bei Verwendung beispielsweise eines Teelichtes als Lichtquelle.

Das die Wand der Hülle bildende leuchtende Gitter wird vorzugsweise aus einem aus Fadenmaterial gewirkten Schlauch, beispielsweise aus unversponnener Glasseide oder unversponnener Glaswolle, gefertigt und danach mit einer nicht brennbaren Flüssigkeit, beispielsweise Wasserglas, getränkt. Der so gefertigte und ausgerüstete Schlauch wird über einen formgebenden Kern, vorzugsweise aus Kunststoff, gezogen und in dieser Anordnung getrocknet. Nach dem Trocknen ist der Schlauch steif. Vor oder nach dem Trocknen kann der Schlauch mit Bändern und Figuren beispielsweise aus Kunststoff oder Metall, dekoriert werden. Nach dem Trocknen wird der Schlauch vom Kern abgenommen.

Ist eine farbige Ausgestaltung der gitterartigen Wand der Hülle gewünscht, kann der entsprechende Farbstoff dem Ausrüstungsmittel wie dem Wasserglas beigegeben werden. Die Herstellung des gitterförmigen Schlauches ist einfach und preiswert auszuführen. Auf diese Weise können auch Hüllen oder Schirme für Leuchten mit elektrisch betriebenen Lichtquellen hergestellt werden.

Das Fadenmaterial für die gitterartige Hülle der erfindungsgemäßen Leuchte kann aber auch aus Baumwolle, Kunststoff u.dgl. bestehen und mit Wasserglas, Stärke, Eiweiß usw. versteift werden, obwohl es sich gezeigt hat, daß derzeit die beste leuchtende optische Wirkung und eine absolute Unbrennbarkeit mit Material wie Glaswolle- und Glasseidefäden erzielt werden können.

In jedem Falle sollte das die Wand der Hülle bildende Material so grobmaschig gefertigt sein, daß die für eine gleichförmige Verbrennung gewünschte Luft in ausreichender Menge durch die Maschen in das Innere der Hülle strömen kann. Obwohl es aus dekorativen Gründen vorzuziehen ist, das die Hülle der erfindungsgemäßen Leuchte bildende Material als vorfabrizierten Schlauch herzustellen, kann dieses gewirkte oder gewebte Material auch zunächst in Form eines Streifens vorliegen, der dann zu der gewünschten Hüllenform zusammengelegt und zusammengenäht oder in anderer Weise verbunden wird.

Die letztgenannte Art der Formgebung ist besonders dann zweckmäßig, wenn der Grundriß der Hülle nicht kreisförmig, sondern beispielsweise vieleckig und insbesondere zackenförmig bzw. sternförmig ist.

Die erfindungsgemäße Leuchte ist vornehmlich für die Verwendung in geschlossenen Räumen bestimmt, kann aber auch als Windlicht im Freien benutzt werden, insbesondere wenn zusätzliche Maßnahmen getroffen sind, welche unmittelbaren Windzug oder sonstige, im Freien im allgemeinen zu erwartende Luftbewegungen von der Flamme der brennenden Lichtquelle fernhalten können.

Eine weitere Möglichkeit der erfindungsgemäßen Leuchte besteht darin, daß an der am oberen Ende der Hülle befindlichen ringförmigen Fassung ein Wasser aufnehmender kleiner Behälter angebracht wird. Bei brennender Lichtquelle verdunstet das Wasser durch die auf den Behälter einwirkende Verbrennungswärme, so daß mit der erfindungsgemäßen Leuchte auch eine gewisse Befeuchtung der Raumluft, in welcher die Leuchte betrieben wird, herbeigeführt werden kann.

Um die erfindungsgemäße Leuchte auch im Freien so benutzen zu können, daß der Flamme der Lichtquelle der für die praktisch rußfreie Verbrennung benötigte Sauerstoff bzw. die dafür benötigte Luft stets in ausreichender Menge zuströmt und andererseits verhindert wird, daß die Flamme durch den Luftzug in der Umluft gestört wird, kann die beispielsweise zylindrisch oder auch konisch ausgebildete Hülle auf der Außenseite und damit zwischen ihrem oberen und ihrem unteren Ende mit wenigstens einer windundurchlässigen umlaufenden Abdeckung versehen sein, die beispielsweise aus einer transparenten Folie besteht. Die Folie kann mit der Hülle fest verbunden oder auch auf diese lose und somit verschiebbar aufgesteckt sein. Bei dieser Ausführungsform der Erfindung bleibt wenigstens am unteren Ende der gitterartigen Hülle ein Teil unabgedeckt, durch den die für die rußfreie Verbrennung notwendige Luft in ausreichender Menge zuströmen kann. Durch das obere Ende der Hülle, auch wenn auf diesem noch Aufbauten oder zusätzliche Abdeckungen vorgesehen sind, kann die von der Flamme hochsteigende warme Verbrennungsluft mehr oder weniger ungehindert abströmen.

Nach einem weiteren Merkmal der Erfindung kann der als Untersatz ausgebildete Halter auf seiner Oberseite drei oder mehr zur Mitte verlaufende Rippen aufweisen, deren nach innen weisende Kanten oder Spitzen so weit auseinander angeordnet sind, daß dazwischen unterschiedlich dicke Kerzen oder Teelichte passen. Bei einer zwischen diese Rippen eingesteckten dicken Kerze mit einem Durchmesser von beispielsweise 40 mm verbleibt unter der Kerze auf der Oberseite des Halters ein Hohlraum, der genügend Platz für eventuell auslaufendes Wachs bildet. Wird hingegen eine dünnere Kerze zwischen die Spitzen anderer Rippen eingesteckt, kann dieser Hohlraum kleiner sein oder ganz entfallen. In jedem Falle kann ein Untersatz aus Kunststoff, Glas, Metall, Porzellan u.dgl. vorgesehen sein, der in Form und Größe innerhalb der durch den Halter gegebenen Grenzen beliebig zu gestalten ist.

Die Abdeckung für die Hülle kann auch aus einer Folie aus hochtemperaturbeständigem und schwer entflammbarem Material, zweckmäßig Kunststoff, bestehen. Die Folie kann vor dem Zusammenlegen und vor dem Zusammenschweißen zu der gewünschten endgültigen Form dekorativ bedruckt werden, gegebenenfalls bereits vor dem Zuschneiden.

Bei Verwendung von mit offener Flamme brennenden Kerzen in einer windgeschützten Hülle, d.h. also in Windlichtern, ergeben sich Schwierigkeiten dadurch, daß durch Wärmereflexion und mangelnde Belüftung die Temperatur in der Hülle ansteigt. Hierdurch wird der normale Abbrand der auf übliche Zimmertemperaturen abgestimmten Kerze gestört, so daß es zum Abfließen und Auslaufen des Wachsmateriales der Kerze kommen kann. Auch innerhalb der erfindungsgemäßen Hülle mit gitterartiger Seitenwand steigt die Temperatur bei brennender Flamme etwas an, jedoch geringer als bei einem üblichen Windlicht. Es wurde nun gefunden, daß der Einsatz von Teelichten die oben aufgeführten Nachteile bekannter Windlichte ausgleichen kann, und zwar insbesondere bei einer erfindungsgemäßen Leuchte mit einer gitterartig ausgebildeten Hülle. Hinzu kommt als Vorteil, daß bei Verwendung eines Windlichtes die Flamme im allgemeinen praktisch stets im unteren Teil der Hülle brennt und nicht, wie bei einer längeren Kerze, zunächst im oberen Teil und dann nach und nach nach unten wandert. Der Nachteil von bekannten Teelichten liegt darin, daß diese nur etwa vier bis fünf Stunden brennen und ihr Wachsvorrat dann aufgebraucht ist. Um diesen Nachteil auszuschalten, wird gemäß einem weiteren Merkmal der Erfindung ein speziell weiterentwickeltes Teelicht vorgeschlagen, das an seinem unteren Ende eine Schale oder ein Näpfchen praktisch gleicher Größe wie bei bekannten Teelichten aufweist, nämlich beispielsweise mit einem Durchmesser von 39 mm und einer Höhe von 18 mm. Der in dieser Schale bzw. diesem Näpfchen vorgesehene Wachspreßling ist jedoch wenigstens etwa doppelt so groß gehalten wie bei einem üblichen Teelicht und hat ein Gewicht von beispielsweise etwa 30 g, was einer Verdoppelung gegenüber dem bisher üblichen Gewicht von etwa 15 g von Teelichten entspricht. Über den oberen Teil des Wachspreßlings ist bei diesem erfindungsgemäßen Teelicht ein an der Außenseite des Wachspreßlinges anliegender Ring, vorzugsweise aus Metall, gestülpt, der sich auf einem kleinen Absatz des Wachspreßlinges abstützt. Dieser Ring kann dabei etwa zwei bis drei mm in das Näpfchen des Teelichtes hineinragen. Er ist auf seiner Außenseite etwa 1,5° konisch mit sich nach unten verjüngendem Ende ausgebildet, ebenso wie die Innenseite der Schalung bzw. des Näpfchens des Teelichtes konisch ist.

Wird dieses Teelicht angezündet, so verflüssigt sich das Wachs im oberen Teil des Preßlinges und verbrennt mit der Zeit. Ist der Wachsspiegel nach entsprechender Brenndauer um einige mm gefallen, so wird durch den wärmeleitenden Ring allmählich Wärme zum unteren Ende desselben und damit zur Auflagestelle des Ringes geleitet, die ein Anschmelzen des Wachses an dieser Stelle des Wachspreßlinges bewirkt, wodurch das Auflager des Ringes schmilzt und der Ring dementsprechend allmählich aufgrund seines Gewichtes nach unten absinkt. Die Flamme bleibt daher auch nach längerer Brennzeit sichtbar. Hierdurch bleibt die genügende Luftzufuhr zur Flamme stets gewährleistet, weil der Ring praktisch mit der Flamme allmählich nach unten wandert. Bei bekannten einfachen Teelichten ist hingegen gerade noch gewährleistet, daß in der letzten Phase des Brennvorganges, also bei fast schon ausgebranntem Teelicht, die Flamme noch ruhig brennt und nicht züngelt und Ruß nicht in überhöhter Menge entwickelt wird. Würde man hingegen die Höhe der Schale bzw. des Näpfchens der bekannten Teelichte bei gleichem Durchmesser auf 25 oder gar 30 mm erhöhen, könnte die Flamme nicht mehr ruhig brennen, weil die für die Verbrennung notwendige Luft von oben über die Oberkante der Schale bzw. des Näpfchens zugeführt werden müßte. Die Folge wäre eine unruhige Flamme und ein hoher Rußanteil.

Der bei dem erfindungsgemäßen Teelicht vorzusehende und mit dem Abbrand desselben absinkende Abdeckring kann mehrfach verwendet werden, d.h. er läßt sich vor dem Einsetzen eines neuen erfindungsgemäßen Teelichtes auf dieses vom Benutzer aufstecken. Dadurch lassen sich nicht nur die Kosten senken, sondern auch der Abfall, so daß diese Lösung umweltfreundlich ist. Die ringförmige Abdeckung kann zum Herauslösen aus der Schale bzw. dem Näpfchen des abgebrannten Teelichtes mit einem seitlich abstehenden Ansatz versehen sein, der ein Kippen des in die Schale bzw. das Näpfchen abgesunkenen Abdeckringes zum Ablösen von erkalteten Wachsresten ermöglicht.

Es ist auch möglich, das mit einer absinkenden ringförmigen Abdeckung versehene Teelicht speziell für die erfindungsgemäße Leuchte so auszubilden, daß die ringförmige Abdeckung aus der unteren Schale bzw. dem unteren Näpfchen des Teelichtes leicht gelöst werden kann. Zu diesem Zweck wird die Schale bzw. das Näpfchen des Teelichtes auf der Außenseite zylindrisch ausgebildet, wie bei bekannten Teelichten, so daß die Schale genau auf den Halter bzw. in eine dort angeordnete Zentrierung paßt. Unter der Schale liegt bei dieser Ausbildung beispielsweise eine gebogene Blattfeder, welche die Schale in einer solchen Höhe hält, daß die Oberkante der Schale etwa in Höhe der Oberkante des die Schale aufnehmenden Halters liegt. Ist der Ring des Teelichtes mit dem Wachsspiegel desselben so weit abgesunken, daß er vollständig von der Schale aufgenommen wird, liegt sein oberer Rand etwa in der Höhe der Oberkanten der Schale und des Halters. Ist danach das Teelicht ganz ausgebrannt, braucht nur noch der Boden der Schale des Teelichtes nach unten gedrückt zu werden, wobei die Blattfeder nach unten nachgibt. Der Ring bleibt am Halter hängen und wird dadurch aus der Schale gelöst. Nach dem Entfernen des Dochthalters kann ein neuer Preßling mit eingeformten Docht in die Schale des Teelichtes eingesetzt werden.

Mit einem Teelicht dieser verbesserten Art kann mit einem Docht und bei gleicher Größe der Flamme eine Brenndauer von zehn bis zwölf Stunden erreicht werden. Auch ist es möglich, mehrere Abdeckringe übereinander auf der Außenseite eines Wachspreßlinges für Teelichte anzuordnen, so daß eine noch längere Brennzeit erreicht werden kann.

Der Vorteil derartiger, mit ringförmiger Abdeckung versehener Teelichte liegt nicht zuletzt darin, daß kein Auslaufen von Wachs stattfindet, man eine lange Brennzeit erhält, die Flamme immer sichtbar ist und daß eine rußfreie Verbrennung gewährleistet ist.

Teelichte als Lichtquelle für die erfindungsgemäße Leuchte haben den Vorteil, daß das Wachs bzw. Paraffin stets praktisch restlos verbrennt. Ein in der Schale verbleibender Wachs- oder Paraffinrest kann beim Abbrennen des nächsten Wachspreßlinges mit verbrennen.

Obwohl vorstehend erläutert ist, daß die ringförmige Abdeckung bei einem Teelicht mit erhöhtem Wachspreßling oder Wachskörper vorgesehen sein soll, ist es auch möglich, ein Teelicht herkömmlicher Größe und Gestalt mit einem Abdeckring zu versehen, der sich von Anfang an etwa in Höhe der Oberkante der Schale bzw. des Näpfchens des Teelichtes befindet. Er ragt dabei zweckmäßig zunächst 4 oder 5 mm über den oberen Rand der Schale oder des Näpfchens des Teelichtes hinaus. Diese Ausführung hat den Vorteil, daß auch bei Verwendung von an sich handelsüblichen Teelichten als Lichtquelle beim Versetzen der brennenden Leuchte das an der Oberfläche flüssig gewordene Wachs nicht leicht ausschwappen kann. Auch ist diese Ausführungsform für Leuchten zweckmäßig, die unter Umständen nicht auf ebener Unterlage stehen, beispielsweise bei Verwendung der Leuchte für Weihnachsbaumschmuck. Gerade bei letztgenannter Ausführungsform der erfindungsgemäßen Leuchte kann diese auf einem Ast eines Baumes entweder aufgrund der Anbringung oder durch nachträgliche Veränderung der Lage des Astes schräg stehen, was bei Verwendung üblicher Teelichte ohne besondere Vorkehrungen zum Auslaufen des Wachses führen kann.

Als Halterung des Abdeckringes auf der Unterseite des nicht abgedeckten Wachspreßlinges eines erfindungsgemäßen Teelichtes kann die ringförmige Abdeckung an der Innenseite mit Stegen versehen sein, die sich beim Aufstecken der Abdeckung auf den Preßling in dessen Wachs eindrücken, um zu gewährleisten, daß die ringförmige Abdeckung nicht zu schnell nach unten rutschen kann.

Das Material der ringförmigen Abdeckung ist bezüglich seiner Wärmeleitfähigkeit auf den Durchmesser der Schale bzw. des Näpfchens des Teelichtes und auf die Größe der Flamme und damit auf den Durchmesser des Teelichtes abzustimmen. Bei höherer Wärmeleitfähigkeit sinkt der Ring schneller ab als bei schlechterer. Auch kann die ringförmige Abdeckung bei wiederverwendbaren Teelichten aus flexiblem Material bestehen, um sie leichter aus der Schale bzw. dem Näpfchen nach vollständigem Abbrennen des Wachspreßlinges entfernen zu können.

Unten bzw. am Boden der Schale bzw. des Näpfchens kann ein Absatz vorgesehen sein, der das restliche und im allgemeinen nicht verbrennende Wachs von der in die Schale abgesunkenen ringförmigen Abdeckung fernhält. Der Dochthalter des Teelichtes sollte gerade ausgerichtet sein, um ein Schrägstellen zu vermeiden.

Um die erfindungsgemäße Leuchte zum Anbringen auf den Ästen von Bäumen wie beispielsweise Weihnachtsbäumen geeignet zu machen, ist nach einem weiteren Merkmal der Erfindung an der Unterseite des Halters der Leuchte über ein Kugelgelenk eine Klammer angebracht, die mit einer Nadel ausgestattet sein kann. Die Klammer wird von oben auf einen Tannenzweig aufgesetzt, wobei sich die Nadel durch den Tannenzweig bohrt und somit ein seitliches Abrutschen oder Verdrehen der Klammer um den Ast verhindert. Mit Hilfe des Kugelgelenkes kann der Halter in eine horizontale Position ausgerichtet werden, woraufhin man die Lichtquelle, beispielsweise ein Teelicht, einsetzt und anzünden kann. Die gitterartige Hülle wird danach aufgesteckt.

Vorzugsweise ist die gitterartige Hülle hierbei mit einer besonderen Abdeckung am oberen Ende versehen, in der Löcher zum Durchtritt von Heißluft vorhanden sind. Dadurch wird die aufsteigende Heißluft beim Austreten aus der Leuchte mit kühlerer Umluft verwirbelt, so daß der Heißluftstrom nach oben gedämpft wird und keine über der Leuchte hängenden höheren Zweige des Baumes Feuer fangen können. Auch ist verhindert, daß Tannennadeln in die Leuchte bzw. deren Lichtquelle fallen können. Die gitterartige Mantelfläche der Hülle verhindert, daß andere Zweige in die Flamme ragen können.

Die Ursache für Weihnachtsbaum-Brände liegt vielfach darin, daß über einer mit offener Flamme brennenden Kerze sich ein weiterer Zweig befindet, der schließlich Feuer fängt, oder daß Tannennadeln auf die Kerze gefallen und dort mit dem Wachs der Kerze eine Verbindung eingegangen sind. Bei herunterbrennender Kerze fängt das so mit Nadeln vermischte Wachs schließlich zu brennen an. Diese Brandursachen werden durch die erfindungsgemäße Leuchte in der zuvor beschriebenen Weise ausgeschaltet. Die Brandgefahr ist bei Verwendung der erfindungsgemäßen Leuchte als Weihnachtsbaumschmuck auch deshalb geringer, weil Teelichte im Verhältnis zu einer üblichen Weihnachtsbaumkerze verhältnismäßig niedrig sind, so daß sich bei der erfindungsgemäßen Leuchte die Flamme dicht über dem betreffenden Zweig des Weihnachtsbaumes, auf dem die Leuchte befestigt ist, befindet und somit in einem größeren Abstand von einem darüber hängenden Zweig brennt.

Besonders geeignet für Weihnachtsbaumdekoration sind erfindungsgemäße Leuchten, bei denen die Lichtquelle ein Teelicht ist, das mit einer mit der Flamme nach unten wandernden ringförmigen Abdeckung versehen ist.

Eine andere Möglichkeit für den dekorativen Einsatz der erfindungsgemäßen Leuchte besteht darin, diese als Aufsatz für Einrichtungsgegenstände wie beispielsweise Blumenvasen auszugestalten. Hierbei kann die Anordnung so gewählt werden, daß zwischen der in der Leuchte untergebrachten Lichtquelle und dem oberen Ende bzw. dem Hals der Blumenvase ausreichend Platz bleibt, um Schnittblumen in die Vase einzustecken. Bei dieser Ausführungsform ist die Tischleuchte sozusagen ein dekorativer Kern oder ein dekorativer Mittelpunkt eines Blumenstraußes. Die erfindungsgemäße Leuchte hat zu diesem Zweck an der Unterseite des Halters verschwenkbar und einstellbar gelagerte Arme, die auf den Hals bzw. die Halsöffnung einer Blumenvase eingestellt werden können und durch Formschluß und/oder Kraftschluß die Leuchte auf der Vase halten. Als Material für diese Arme kommen Kunststoff, Porzellan, Keramik und Metall, aber auch andere geeignete Materialien infrage. Wichtig ist, daß die Standfestigkeit des Halters auf der Vase ausreicht, damit die auf der Vase angebrachte Leuchte beim Umsetzen oder Verschieben der Vase nicht herunterfallen kann. Nach einer weiteren Ausführungsform der Erfindung kann die gitterartige zylindrische Hülle an der Innenseite mit in Längsrichtung verlaufenden Rippen aus Metall, Kunststoff od. dgl. versehen sein, die dazu dienen, eine Kerze exakt in der Mitte der zylindrischen Hülle zu halten, so daß eventuell herabfließendes Wachs nicht mit dem Gitter der Hülle in Kontakt kommt und dieses Gitter gegebenenfalls sogar verstopft. Diese Ausführungsform ist besonders für lange Kerzen geeignet, wie sie beispielsweise in Kirchen nicht unüblich sind. Kirchliche Embleme usw. können außen auf dem gitterförmigen Mantel der Hülle angebracht werden, so daß sie nicht verbrennen. Auf diese Weise können sehr einfache, schlichte und sachliche Kerzen verwendet werden, die durch die gitterartige erfindungsgemäße Hülle dekorativ ausgestaltet sind.

Auch in diesem Falle erfolgt die Verbrennung der als Lichtquelle benutzten Kerze ruhig und rußfrei. Das ist bei der Vielzahl von Kerzen, die in einer Kirche benutzt werden, von nicht geringer Bedeutung, nicht zuletzt deshalb, weil Kosten für Dekoration und gegebenenfalls Restauration besonders in kirchlichen Gebäuden teuer sind. Hinzu kommt, daß die Leuchtkraft einer Kerzenflamme durch die erfindungsgemäße gitterartige Hülle letztlich sogar noch erhöht wird, weil nämlich das Gittermaterial der Hülle die Leuchtwirkung der Flamme nicht nur nach oben, sondern auch nach den Seiten und sogar nach unten lenkt, d.h. in eine Richtung, die vom meist tiefer stehenden Betrachter aus besonders erfaßt wird. Die Hülle selbst kann oben oder unten wiederum mit einem Abschlußring versehen sein.

Die Hülle der erfindungsgemäßen Leuchte kann auch mit einem solchen Aufsatz versehen sein, der die eigentliche Leuchte bzw. deren Hülle in Form einer zweiten, weiter außen liegenden Hülle umgibt, die gegenüber der ersten Hülle drehbar gelagert ist. Auf einem auf der inneren Hülle der Leuchte angebrachten feststehenden zentrischen Lager stützt sich beispielsweise ein Zapfen mit einer Kugel am unteren Ende ab, auf dem eine Turbinenscheibe mit schräg gestellten radialen Flügeln angebracht ist. Am äußeren Rand ist eine zylinderförmige Manschette befestigt, die nach unten hängt und die innere Hülle mit Abstand umgibt und sich beispielsweise bis zum unteren Rand der inneren Hülle oder sogar noch tiefer erstreckt. Bei brennender Kerze steigt von der Flamme heiße Luft nach oben und streicht durch die Turbinenscheibe, welche dadurch um die senkrechte zentrale Achse zu rotieren beginnt. Die Turbinenscheibe nimmt bei ihrer Drehbewegung die an ihrer Unterseite befestigte herabhängende äußere Manschette oder Hülle mit, die somit ebenfalls rotiert. Auf der Mantelfläche der Manschette können Figuren oder sonstige dekorative Motive angebracht werden, die mit der Manschette umlaufen. Diese Ausführungsform ist besonders für weihnachtliche Motive interessant.

Das Lager dieser Ausführungsform kann beispielsweise eine Kalotte bzw. eine nach oben offene Lagerpfanne aus Achat aufweisen. Das Gegenstück dieses Lagers ist vorzugsweise eine kleine Stahlkugel, die am unteren Ende des drehbar gelagerten Zapfens angebracht ist. Es ist aber auch ein Nadellager denkbar.

Bei dieser Ausführungsform braucht die als Lichtquelle dienende Kerze nicht in einer inneren Hülle mit einer gitterförmigen Mantelfläche oder Mantelwand angeordnet zu werden. Vielmehr genügt es, den feststehenden Teil der inneren Hülle aus einem durchsichtigen Gestell, beispielsweise aus Draht, zu bilden, damit die Flamme der Kerze besser durch die äußere Manschette hindurch strahlen oder leuchten kann.

In der Zeichnung sind verschiedene Ausführungsform der erfindungsgemäßen Leuchte schematisch dargestellt, und zwar zeigt

Figur 1 einen senkrechten Schnitt einer ersten Ausführungsform der Leuchte, wobei in einer maschen- oder gitterförmigen zylindrischen Hülle eine Kerze angeordnet ist, welche auf der Außenseite senkrecht verlaufende Rippen aufweist,

Figur 2 einen horizontalen Schnitt der Leuchte nach Linie II-II aus Figur 1,

Figur 3 einen senkrechten Schnitt einer zweiten Ausführungsform der Leuchte, bei der die in einer zylindrischen Hülle untergebrachte Kerze am unteren Ende strahlenförmige Erweiterungen aufweist, die als Unterlage und als Fuß für die Tischleuchte dienen,

Figur 4 einen horizontalen Schnitt der Leuchte aus Figur 3 nach Linie IV-IV aus Figur 3,

Figur 5 einen senkrechten Schnitt einer dritten Ausführungsform der Leuchte, wobei ein als Untersatz dienender Halter gezeigt ist,

Figur 6 einen horizontalen Schnitt der Leuchte aus Figur 5 nach Linie VI-VI aus Figur 5,

Figur 7 einen senkrechten Schnitt einer weiteren Ausführungsform der Leuchte, welche einen als Untersatz ausgebildeten, aus Metall bestehenden Halter aufweist, wobei die die als Lichtquelle dienende Kerze umschließende Hülle im Grundriß achteckig ausgebildet ist,

Figur 8 einen horizontalen Schnitt der Leuchte aus Figur 7 nach Linie VIII-VIII aus Figur 7,

Figur 9 einen senkrechten Schnitt noch einer weiteren Ausführungsform der Leuchte, wobei auf einen als Halter dienenden schalenförmigen Untersatz, in den als Lichtquelle ein Teelicht eingesetzt ist, eine im Grundriß zylinderförmige Hülle aufgesteckt ist,

Figur 10 einen horizontalen Schnitt der Leuchte aus Figur 9 nach Linie X-X aus Figur 9,

Figur 11 einen senkrechten Schnitt noch einer weiteren Ausführungsform der Leuchte, wobei in einer kolbenförmigen Hülle als Lichtquelle ein Petroleumbrenner angeordnet ist,

Figur 12 einen horizontalen Schnitt der Leuchte aus Figur 11 nach Linie XII-XII aus Figur 11,

Figur 13 einen senkrechten Schnitt noch einer anderen Ausführungsform der Leuchte mit einer in die Oberseite eines als Fuß dienenden Halters eingesteckten Kerze und einer auf den Halter aufgesteckten, im Grundriß zylindrische Hülle, deren Mantelfläche zum Teil mit einer windundurchlässigen Abdeckung versehen ist,

Figur 14 einen horizontalen Schnitt der Leuchte aus Figur 13 nach Linie XIV-XIV aus Figur 13,

Figur 15 einen senkrechten Schnitt einer weiteren Ausführungsform der Leuchte, wobei die die Kerze aufnehmende Hülle im oberen Bereich konisch ausgebildet ist,

Figur 16 einen horizontalen Schnitt der Leuchte aus Figur 15 nach Linie XVI-XVI aus Figur 15,

Figur 17 einen senkrechten Schnitt einer weiteren Ausführungsform der Leuchte, die ein schalenförmiges Unterteil aufweist und eine Kerze enthält, deren oberes Ende mit einem mit dem Abbrand herabsinkenden unbrennbaren Abdeckring versehen ist,

Figur 18 einen senkrechten Schnitt einer zum Anbringen auf einem Weihnachtsbaum anzuordnenden Ausführungsform der Leuchte,

Figur 19 einen senkrechten Schnitt einer auf einer Blumenvase befestigten Ausführungsform der Leuchte,

Figur 20 einen senkrechten Schnitt einer weiteren Ausführungsform der Leuchte, die besonders für lange und einen verhältnismäßig großen Durchmesser aufweisende Kerzen geeignet ist,

Figur 21 eine Draufsicht der Leuchte aus Figur 20 und

Figur 22 einen senkrechten Schnitt einer eine drehbar gelagerte äußere Manschette aufweisenden Leuchte.

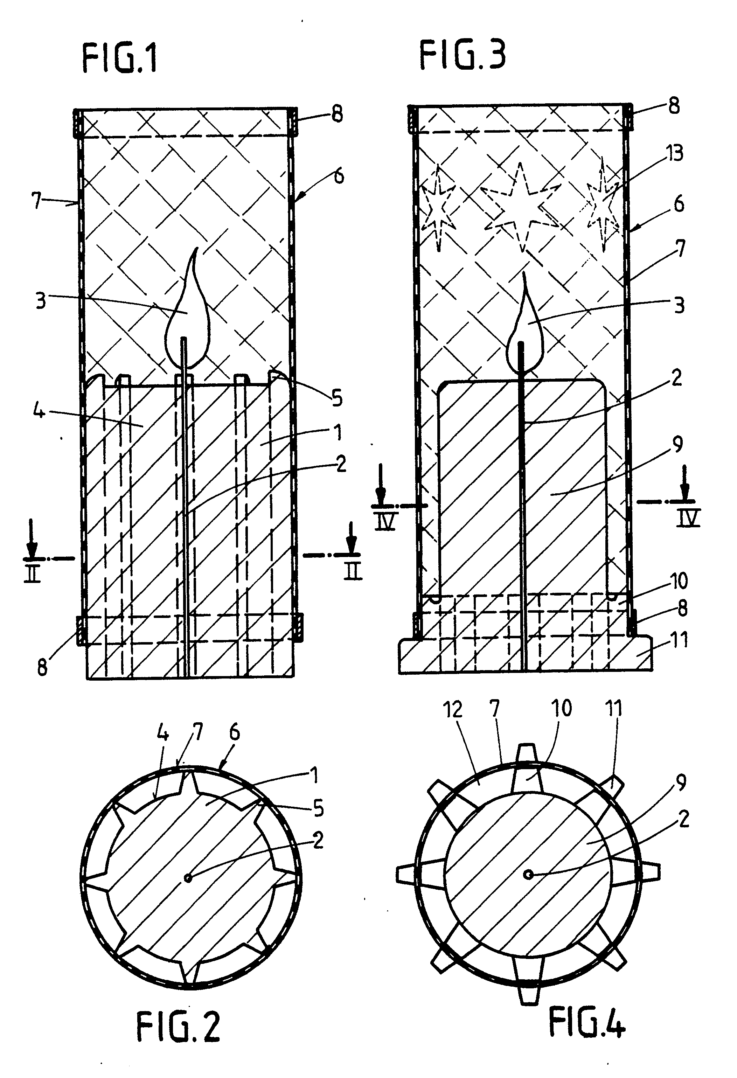

Die in Figur 1 und 2 dargestellte Tischleuchte weist eine Kerze (1) mit einem zentral in dieser angeordneten Docht (2) auf, die mit offener Flamme (3) abbrennen kann. Auf der im wesentlichen zylindrischen Außenseite des Wachskörpers (4) der Kerze (1) sind senkrecht verlaufende keilförmige Rippen (5) in winkelmäßig gleichem Abstand zueinander versetzt angeordnet, wie insbesondere Figur 2 zeigt.

Auf die Kerze (1), welche bei der Ausführungsform gemäß Figur 1 und 2 zugleich den Untersatz und Halter der Leuchte bildet, ist eine im Grundriß zylinderförmige Hülle (6) von oben aufgesteckt. Sie schließt die Kerze (1) weitgehend ein, was in Figur 1 dargestellt ist. Wie jedoch Figur 2 zeigt, halten die Rippen (5) die Hülle (6) im konzentrischen Abstand von der Kerze (1) und insbesondere dem zentral in dieser angeordneten Docht (2), so daß die Flamme (3) bei mehr oder weniger normaler Position der Leuchte nicht in Kontakt mit der Innenseite der Hülle (6) kommen kann.

Die Hülle (6) besteht aus einem zylindrischen Mantel (7), der aus einem offenmaschigen oder gitterartigen, flammfest und feuersicher ausgerüstetem Fadenmaterial gewirkt, gewebt, geflochten, gehäkelt oder sonstwie geformt ist. An den beiden Enden der Hülle (6) ist auf dieser jeweils ein Abschlußring (8) befestigt.

Figur 1 zeigt, daß die Hülle (6) nicht vollständig über die Kerze (1) gestülpt ist, sondern einige Millimeter über dem unteren Ende der Kerze (1) endet. Dadurch erreicht man, daß eventuell von der Kerze abfließendes flüssiges Wachs seitlich ablaufen kann und nicht mit dem Mantel (7) der Hülle (6) in Kontakt kommt. Zum Anzünden der Kerze (1) kann vorher die Hülle (6) abgenommen werden. Beim Brennen der Kerze (1) entsteht durch die von der Flamme (3) ausgehende heiße aufsteigende Luft in der Hülle (6) eine Kaminwirkung, so daß durch die Öffnungen im maschenartig ausgebildeten Mantel (7) der Hülle (6) von allen Seiten Frischluft gleichzeitig angesaugt wird und mit der heißen aufsteigenden Verbrennungsluft nach oben steigt. Dadurch wird die Flamme (3) stabilisiert, so daß sie bei in einem Zimmer herrschender normaler Luftturbulenz nicht flackert oder züngelt. Das hat eine einwandfreie Verbrennung zur Folge, die einen Ausstoß von Ruß praktisch verhindert.

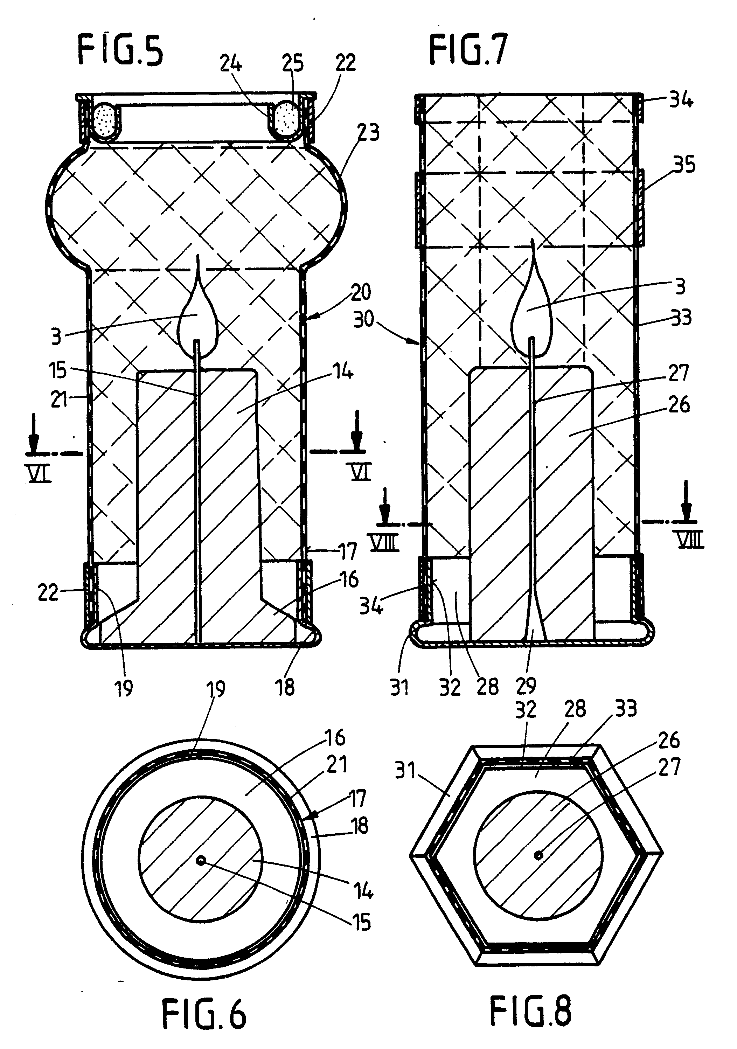

Bei der Ausführungsform der Leuchte gemäß Figur 3 und 4 ist eine Kerze (9) vorgesehen, die am unteren Ende zwei seitlich überstehende Absätze (10 und 11) aufweist. Diese Absätze (10 und 11) sind, wie Figur 4 zeigt, als seitlich vorstehende Zungen ausgebildet. Die zungenartigen Absätze (10) sind kürzer als die ebenfalls zungenförmig ausgebildeten Absätze (11) ausgeführt und dienen zum Zentrieren des unteren Endes einer aufgesteckten bzw. aufgestülpten Hülle (6), so daß deren aus feuerfest ausgerüsteter Maschen- oder Gitterware bestehender Mantel (7) nicht in Kontakt mit der brennenden Kerze und insbesondere nicht mit der Flamme (3) derselben kommen kann. Am oberen und unteren Ende der Hülle (6) ist jeweils wiederum ein Abschlußring (8) vorgesehen. Zwischen den zungenartigen Ansätzen (10 und 11) befinden sich Ausnehmungen (12), wie Figur 4 zeigt, durch die eventuell herabtropfendes bzw. herabfließendes Wachs nach außen abfließen kann, ohne mit dem gitterförmigen Mantel (7) der Hülle (6) in Kontakt zu treten.

Bei dieser Ausführungsform sind im oberen Bereich der Hülle (6) Sternchen (13) als Dekorationselemente angebracht, die aus Papier, Metall u.dgl. bestehen können. Diese Dekorationen können beliebig gewählt werden.

Bei der Ausführungsform einer Leuchte gemäß Figur 5 und 6 ist eine Kerze (14) mit zentralem Docht (15) vorgesehen, wobei die Kerze am unteren Ende eine umlaufende und seitlich überstehende Verstärkung (16) aufweist. Die Kerze (14) ist mit dieser Verstärkung (16) in einen aus Metall, Kunststoff, Keramik od. dgl. bestehenden Untersatz (17) eingesteckt. Der Untersatz (17) hat einen unteren, nach außen umlaufenden wulstförmigen Fuß-Abschnitt (18) und einen von diesem nach oben hochstehenden halsförmigen zylindrischen Kragen (19), auf den eine im wesentlichen zylindrische Hülle (20) von oben aufgesteckt und damit von diesem konzentrisch zur Kerze (14) gehalten werden kann. Die Hülle (20) besteht aus einem weitgehend zylindrischen Mantel (21), der aus maschenförmigem oder gitterförmigem, flammfest und unbrennbar ausgestalteten bzw. ausgerüsteten Material wie beispielsweise einem Gestrick, Geflecht, Gewirk, Gewebe oder sonstigem Netzwerk aus Glasseide- oder Glaswolle-Fasern aufgebaut sein kann. Am oberen und am unteren Ende der Hülle (20) ist jeweils wiederum ein Abschlußring (22) angeordnet, welcher der Hülle eine gewisse Stabilität verleiht.

Bei der Ausführungsform gemäß Figur 5 und 6 ist die Hülle (20) bzw. deren Mantel (21) nahe dem oberen Ende aus dekorativen Gründen mit einer wulstartigen Aufweitung (23) versehen. In das obere Ende der Hülle (20) ist ein ringförmiger Behälter (24) eingehängt, in welchem sich eine saugfähige Einlage (25) befindet, die zur Aufnahme von Duftstoff oder beispielsweise auch einem flüchtigen Mückenbekämpfungsmittel verwendet werden kann und beispielsweise aus Glaswolle besteht. Durch die innerhalb der Hülle (20) aufsteigende heiße Luft wird der Behälter (24) und damit die in ihm befindliche saugfähige Einlage (25) erwärmt, so daß das im Behälter bzw. der Einlage befindliche flüssige Mittel nach und nach sich verflüchtigt und damit verdunstet.

Abtropfendes Kerzenwachs kann bei dieser Ausführungsform vom Untersatz (17) aufgefangen werden. Auch hierbei ist gewährleistet, daß dieses Wachs nicht mit dem Mantel (21) der Hülle (20) in Kontakt kommen kann, so daß es auch nicht dessen Öffnungen verstopfen kann.

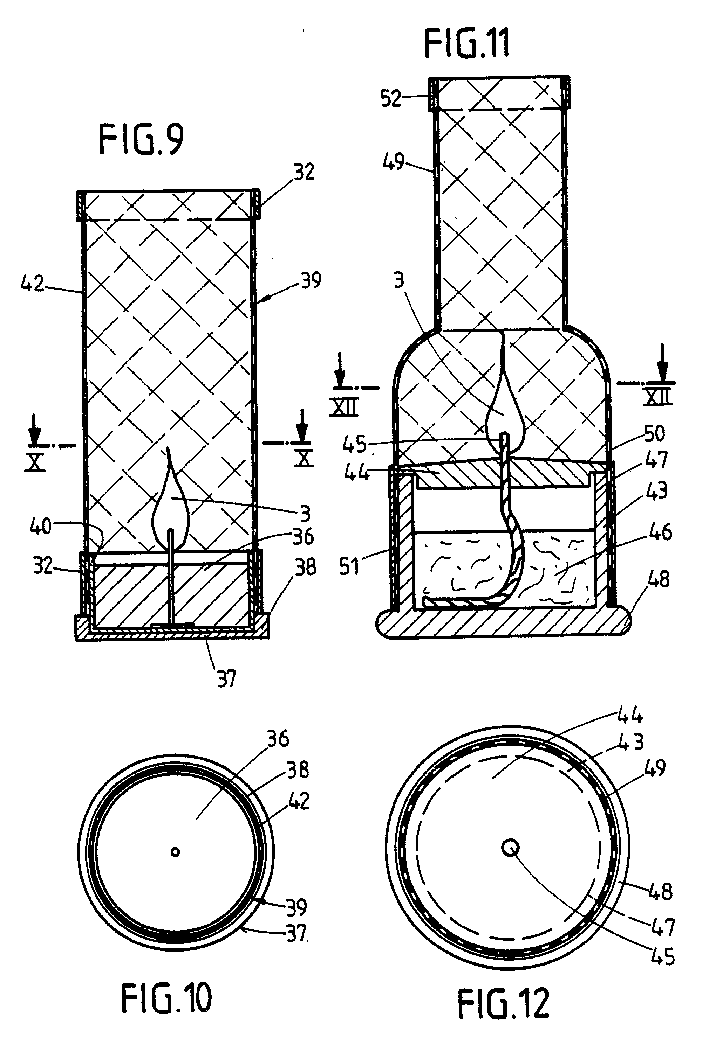

Bei der in Figur 7 und 8 dargestellten Ausführungsform handelt es sich um eine Leuchte, bei der eine serienmäßig hergestellte Kerze (26) mit eingeformtem Docht (27) Verwendung findet. Auf dem Boden eines im Grundriß sechseckigen schalenförmigen Untersatzes (28) ist ein angespitzter Dorn (29) befestigt, auf den die Kerze (26) gesteckt wird, so daß sie sich zentrisch im Untersatz (28) befindet.

Auch bei dieser Ausführungsform ist eine Hülle (30) vorgesehen, die lösbar auf den Untersatz (28) aufgesteckt werden kann und die in Übereinstimmung mit der Form des Untersatzes einen sechseckigen Grundriß hat, wie insbesondere Figur 8 zeigt. Der Untersatz (28) hat am unteren Ende eine wulstförmige, nach außen vorstehende Erweiterung (31), auf der die aufgesteckte Hülle (30) mit ihrem unteren Ende aufliegt, wie Figur 7 zeigt. Von der Erweiterung (31) führt ein im Grundriß sechseckiger Kragen (32) praktisch senkrecht nach oben, der das untere Ende der aufgesteckten Hülle (30) abstützt und somit gewährleistet, daß die aufgesteckte Hülle (30) senkrecht und konzentrisch zur Kerze (26) steht, damit deren Flamme (3) mit dem Mantel (33) nicht in Kontakt kommen kann. Der Untersatz (28) ist, wie Figur 7 zeigt, schalenförmig ausgebildet und dient zum Auffangen von eventuell herablaufendem geschmolzenen Wachs der Kerze (26).

Die Hülle (30) ist auch bei dieser Ausführungsform am oberen und unteren Ende je mit einem Abschlußring (34) versehen. Zwischen den beiden Enden der Hülle (30) ist auf deren Außenseite außerdem ein für Dekorationszwecke bestimmter weiterer Ring (35) angeordnet, der auf der Hülle (30) verschiebbar sitzen kann und beispielsweise Dekorationsbilder trägt und/oder dekorative Öffnungen enthält. Der Mantel (33) der Hülle (30) besteht auch bei dieser Ausführungsform aus eine Vielzahl von Öffnungen enthaltendem maschen- oder gitterförmigen, flammfest und unbrennbar ausgerüsteten Material, ähnlich wie bei den zuvor beschriebenen Ausführungsformen.

Bei der Ausführungsform gemäß Figur 9 und 10 findet als Leuchtquelle ein handelsübliches Teelicht (36) Verwendung. Dieses Teelicht (36) ist in einen schalenförmigen Untersatz (37) mit hochstehendem Rand (38) eingesteckt, so daß es nicht seitlich verrutschen kann. Außerdem ist auf den Untersatz (37) eine im Grundriß kreisförmige und somit insgesamt zylinderförmige Hülle (39) aufgesetzt, die beim Ausführungsbeispiel gemäß Figur 9 und 10 keine seitliche Abstützung erfährt, weil die Hülle (39) von der hochstehenden Wand (40) des in den Untersatz (37) eingesteckten Teelichtes (35) gegen seitliches Verrutschen abgesichert ist.

Auch bei dieser Ausführungsform besteht der Mantel (42) der Hülle (39) aus maschen- oder gitterförmigem Material der oben im einzelnen erläuterten Art. Am oberen und unteren Ende der Hülle (39) befindet sich je ein die Hülle stabilisierender Abschlußring (32), ähnlich wie bei den zuvor erläuterten Ausführungsbeispielen.

Bei der in Figur 11 und 12 dargestellten Ausführungsform der Leuchte ist der Halter als Behälter (43) ausgebildet und mit einem Deckel (44) versehen. Beide Teile des Halters oder Ständers bestehen aus feuerfestem Material wie Glas, Metall od. dgl. Der Deckel (44) enthält eine zentrale Öffnung für einen Docht (45), an dessen äußeren Ende eine offene Flamme (3) brennen kann. Der Behälter (43) enthält flüssiges Brennmaterial (46) wie Petroleum, Paraffinöl od. dgl., das vom in den Behälter (43) hineinhängenden Docht herausgesaugt und der zentral über dem Deckel (44) brennenden Flamme (3) zugeführt wird.

Der Behälter (43) weist einen zentralen zylindrischen Kragen (47) und einen radial über den Kragen überstehenden wulstförmigen Fuß (48) auf. Auf den Kragen (47) des Behälters (44) ist, wie Figur 11 zeigt, eine wie der Glaszylinder einer bekannten Petroleumlampe geformte flaschenförmige Hülle (49) aufgesteckt, deren erweitertes unteres Ende (50) auf dem zylindrischen Kragen (47) des Behälters (43) sitzt und von diesem zentriert wird. Sowohl am oberen als auch am unteren Ende der Hülle (49) befindet sich jeweils ein diese umschließender Abschlußring (51 bzw. 52), wobei der am unteren Ende (50) befindliche Abschlußring (51) etwa der Höhe des Kragens (47) des Behälters (43) entspricht, während der am oberen Ende der Hülle (49) befindliche Abschlußring (52) eine geringere Breite aufweist.

Bei allen vorstehenden genannten Ausführungsformen und auch bei den später erläuterten kann das den Mantel der jeweiligen Hülle bildende maschen-oder gitterartige Material, welches durch die im Inneren der Hülle befindliche Lichtquelle leuchtend gemacht werden kann, vielfältig dekorativ ausgebildet sein, beispielsweise Weihnachtsmotive, Sternzeichen, Blumen, Tierfiguren, Reklameangaben und sonstige Embleme tragen. Damit ergibt sich eine vielgestaltige Einsatz- und Anwendungsmöglichkeit der erfindungsgemäßen Leuchte, die sowohl in geschlossenen Räumen als auch, bei entsprechender Ausgestaltung, im Freien benutzt werden kann.

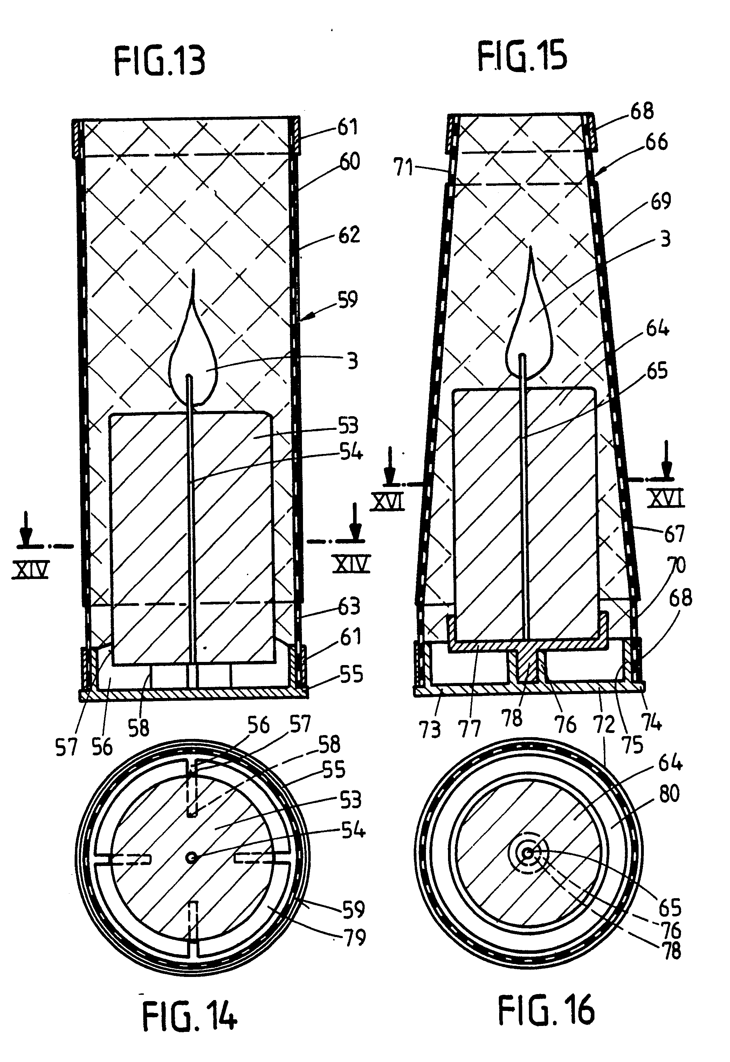

Bei der Ausführungsform gemäß Figur 13 und 14 weist die Leuchte wiederum eine handelsübliche oder in handelsüblichen Abmessungen ausgebildete Kerze (53) mit zentral darin angeordnetem Docht (54) auf, die ebenfalls mit offener Flamme (3) brennen kann. Die Kerze (53) ist in einen als Halter dienenden Untersatz (55) eingesetzt, der beim dargestellten Ausführungsbeispiel vier zum Zentrum des Untersatzes verlaufende Rippen (56) aufweist, die in gleichförmigem Abstand zueinander über den Umfang des im Grundriß kreisförmigen Untersatzes (55) verteilt angeordnet sind. Die Rippen (56) weisen zum Zentrum des Untersatzes (55) gerichtete winkelförmige Ausnehmungen (57) und abgesetzte Stirnenden (58) auf, die in einem derartigen Abstand voneinander liegen und so bemessen sind, daß Kerzen mit unterschiedlichem Durchmesser in den Untersatz (55) eingesteckt werden können. Beim dargestellten Ausführungsbeispiel ist eine Kerze (53) mit einem Außendurchmesser von 40 mm in den Untersatz (55) eingesteckt, die mit ihrem unteren Ende auf den Ausnehmungen (57) der Rippen (56) aufliegt. Es kann auch eine Kerze mit einem Durchmesser von 20 mm eingesteckt werden, die zwischen die Stirnenden (58) der Rippen (56) paßt. Ein Teelicht mit einem Durchmesser von etwa 40 mm paßt ebenfalls in die Leuchte gemäß Figur 13 und 14. Ein derartiges Teelicht würde, ebenso wie die zeichnerisch dargestellte Kerze (53), auf den winkelförmigen Ausnehmungen (57) der Rippen (56) aufliegen.

Die Leuchte gemäß Figur 13 und 14 ist mit einer zylindrischen Hülle (59) versehen, die auf den Untersatz (55) aufgesteckt ist und von den Außenkanten der Rippen (56) gegenüber der eingesetzten Kerze (53) zentriert ist. Der Mantel (16) der Hülle (59) besteht auch in diesem Falle aus maschen- oder gitterförmigem, flammfesten und feuerbeständigen Material, obwohl die Hülle, wie auch bei den zuvor beschriebenen Ausführungsformen, unbrennbar ist. An den äußeren Enden der Hülle (59) befinden sich, ebenso wie bei den anderen Ausführungsbeispielen, Abschlußringe (61), die auch zur Stabilisierung der Hülle dienen.

Auf der Hülle (59) ist eine sich über einen größeren Teil der Hülle erstreckende luftundurchlässige Manschette (62) angeordnet, die sich über den größeren Teil der Höhe der Hülle (59) erstreckt und lediglich im unteren Bereich der Hülle (59) einen Spalt (63) frei läßt, durch den Frischluft nachströmen kann. Somit entsteht innerhalb der aufgesteckten Hülle (59) bei brennender Kerze (53) eine gewisse Kaminwirkung, weil Frischluft nur durch den Spalt (63) von unten nachströmen kann. Da die Flamme (3) von der aus Folienmaterial bestehenden Manschette (62) im übrigen abgedeckt und somit geschützt ist, findet bei dieser Ausführungsform auch bei stärkerem Luftzug von außen, beispielsweise bei Wind, eine ruhige und damit rußfreie Verbrennung statt, so daß die Leuchte gemäß Figur 13 und 14 auch für Verwendung im Freien geeignet ist.

Bei der Ausführungsform der Leuchte gemäß Figur 15 und 16 ist eine Kerze (63) mit zentral darin angeordnetem Docht (65) in einer im wesentlichen konisch ausgebildeten Hülle (66) angeordnet. Die Konizität des Mantels (67) der Hülle (66) ist so gewählt, daß die Flamme (3) der Kerze (64) nicht mit dem Mantel (67) in Kontakt kommen kann, selbst wenn die Leuchte nicht genau senkrecht steht. Der Mantel (67) besteht, wie bei den zuvor beschriebenen Ausführungsformen, ebenfalls aus einem maschen- oder gitterförmigen flammfesten und unbrennbaren Material. Am oberen und unteren Ende der Hülle (66) ist, ebenso wie bei den zuvor beschriebenen Ausführungsformen, je ein Abschlußring (68) auf der Außenseite der Hülle angeordnet.

Auf der Außenseite des konischen Teiles der Hülle (66) befindet sich eine luftundurchlässige konische Manschette (69), welche den größeren Teil des Mantels (67) der Hülle abdeckt, so daß nur am unteren und am oberen Ende der Hülle (66) ein Spalt (70 bzw. 71) frei bleibt, wobei durch diese Spalte Luft in das Innere der Hülle (66) strömen bzw. aus dieser Hülle austreten kann. Die Hülle (66) ist jedoch, wie bei den zuvor beschriebenen Ausführungsformen, nach oben offen, so daß die von der Flamme (3) ausgehende heiße Luft im wesentlichen durch diese Öffnung ausströmt.

Bei dieser Ausführungsform ist als Halter ein zweiteiliger Untersatz (72) vorgesehen. Der Untersatz (72) weist eine als Fuß und somit als Auflage dienende äußere Schale (73) mit nach außen radial vorstehendem Rand (74) und einem hochstehenden, im wesentlichen zylindrischen Hals (75) auf, der die aufgesteckte Hülle (66) gegenüber der Kerze (64) zentriert. Die Hülle liegt mit ihrem unteren Ende auf dem radial vorstehenden Rand (74) auf.

In der Mitte der Schale (73) ist eine hochstehende hohle Buchse (76) angeordnet, die zur Aufnahme einer Fassung (77) dient, in welche die Kerze (64) eingesteckt ist, wie insbesondere Figur 15 zeigt. Die Fassung (77) ist mit einem Zapfen (78) versehen, der in die Buchse (76) paßt und in diese eingesteckt ist.

Sowohl Figur 14 als auch Figur 16 zeigen, daß zwischen der Hülle (59 bzw. 66) und der Kerze (63 bzw. 64) ein ausreichender Abstand (79 bzw. 80) verbleibt, damit eventuell überfließendes Wachsmaterial über den Außenrand der Kerze (63 bzw. 64) nach unten herabfließen und sich innerhalb des Untersatzes (55 bzw. 72) sammeln kann, ohne den Mantel (60 bzw. 67) der betreffenden Hülle zu berühren, so daß der Mantel bzw. dessen Öffnungen auch nicht von herabfließendem Kerzenmaterial wie Wachs verstopft werden kann.

Bei brennender Kerze (64) strömt durch den Spalt (70) Frischluft von unten in die Hülle (66) und steigt innerhalb der Hülle nach oben. Wegen der sich nach oben konisch verengenden Form der Hülle (66) ist die Verbrennung besonders gut. Die Manschette (69) gewährt einen guten Windschutz. Sie kann aber auch durch Abziehen nach oben abgenommen oder gegen eine andere Manschette ausgetauscht werden.

Bei allen vorstehend beschriebenen Ausführungsformen dient der Untersatz für Kerze und Hülle als Halter der Leuchte. An diesem Halter können Befestigungselemente oder auch ein Fuß angebracht sein, wie nachstehend an einzelnen weiteren Beispielen erläutert wird.

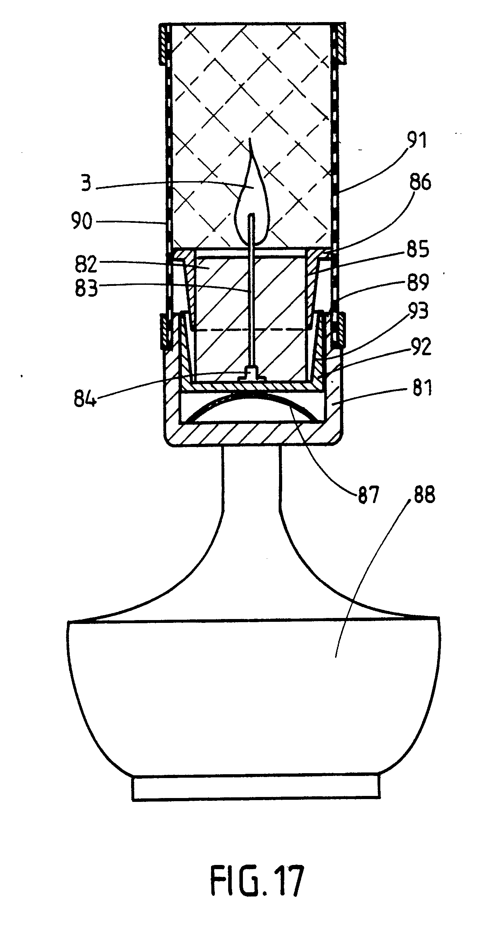

Bei der in Figur 17 dargestellten Ausführungsform der Leuchte ist in einem schalenförmigen Unterteil (81) ein Teelicht (82) mit eingelassenem zentralen Docht (83) und Dochthalter (84) eingesteckt. Das Teelicht brennt auch bei dieser Ausführungsform mit offener Flamme (3).

Im oberen Bereich des Teelichtes (82) ist auf dieses ein aus nicht brennbarem Material wie beispielweise Metall bestehender Ring (85) aufgesteckt, der sich nach unten konisch verjüngt und am oberen Ende einen rechtwinklig abgebogenen, nach außen weisenden umlaufenden Flansch (86) aufweist. Der Ring (85) und der daran angebrachte Flansch (86) sind gut wärmeleitend, so daß der Ring (85) mit zunehmendem Abbrand der Kerze nach unten wandert und schließlich in dem schalenartigen Unterteil (81) verschwindet. Der horizontale Flansch (86) verhindert dabei, daß der Ring (85) zu tief in das Unterteil (81) hineinrutschen kann.

Unterhalb des Teelichtes (82) befindet sich im Unterteil (81) eine nach oben gewölbte Blattfeder (87), auf welcher das untere Ende des Teelichtes (82) und der dort befindliche Dochthalter (84) aufliegen. Ist das Teelicht (82) ausgebrannt, genügt es, wenn man auf das Teelicht - entweder direkt oder über den Ring (85) - Druck ausübt und dabei die Blattfeder (87) weiter vorspannt, um den Wachsrest mit Dochthalter aus dem Unterteil zu lösen.

Bei der in Figur 17 dargestellten Ausführungsform ist das als Halter dienende Unterteil (81) auf einem lampenartigen Fuß (88) angeordnet.

Das schalenartige Unterteil (81) weist an seinem oberen Ende einen nach innen versetzten umlaufenden Kragen (89) auf, auf den eine als Leuchtkörper dienende Hülle (90) aufgesteckt werden kann, damit diese konzentrisch zur Flamme (3) sitzt. Die Hülle (90) hat auch bei dieser Ausführungsform einen zylindrischen Mantel (91), der aus flammfestem und nicht brennbarem, gitterartigen oder maschenartigen Material besteht. Abschlußringe können am oberen und unteren Ende der zylindrischen Hülle vorgesehen sein.

Bei der Ausführungsform gemäß Figur 17 befindet sich das untere Ende der Kerze (82) in einem schalenartigen Näpfchen (92), das eine hochstehende, im Querschnitt sich nach oben verjüngende, innen konische Seitenwand (93) aufweist, die zwischen sich den Ring (85) aufnehmen kann.

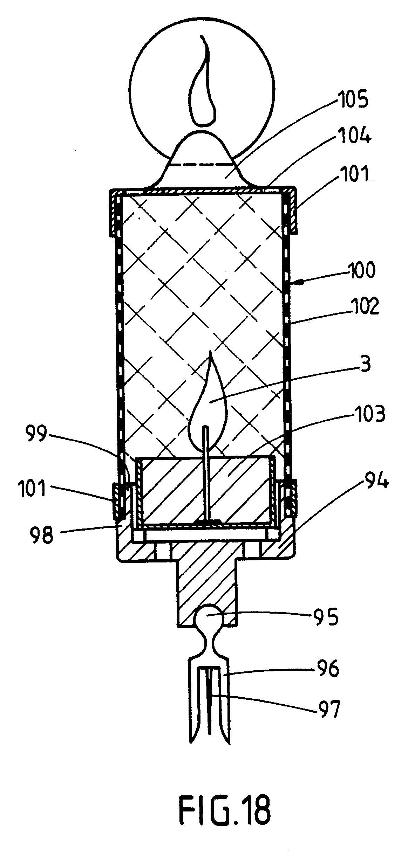

Die in Figur 18 dargestellte Ausführungsform der Leuchte ist zum Anbringen an Weihnachtsbäumen ausgelegt. An der Unterseite eines als Halter dienenden schalenförmigen Unterteiles (94) ist über ein Kugelgelenk (95) eine Klammer (96) angeordnet, die zum Aufstecken auf einen nicht dargestellten Ast eines Baumes wie eines Weihnachtsbaumes dient. In der Klammer (96) ist eine starre Nadel (97) angeordnet, die durch den Ast, auf welchen die Klammer (96) aufgesteckt wird, hindurchgebohrt werden kann, um somit ein seitliches Wegkippen der Klammer (96) und damit der gesamten Leuchte zu verhindern.

Das Unterteil (94) weist eine hochstehende zylindrische Seitenwand (98) auf, deren oberes Ende als nach innen zurückversetzter Kragen (99) ausgebildet ist. Auf diesen Kragen (99) kann eine Hülle (100) lösbar aufgesteckt werden, wie Figur 18 zeigt. Die Hülle (100) weist an den beiden Enden je einen Abschlußring (101) auf und hat einen zylindrischen Mantel (102), der aus gitterförmigem oder maschenförmigem, flammfest und unbrennbar ausgerüsteten Material besteht, wie auch bei den vorher erläuterten Ausführungsformen.

In das Unterteil (94) ist als Lichtquelle ein Teelicht (103) eingesetzt, das mit offener Flamme (3) brennen kann.

Auf das obere Ende der Hülle (100) ist ein Luftlöcher (104) enthaltender Deckel (105) aufgesteckt, der als Abdeckung und als Halter für eine als Dekoration vorgesehene, hochstehende Scheibe dient. Diese Scheibe kann das Bild einer Flamme oder auch einen Stern tragen.

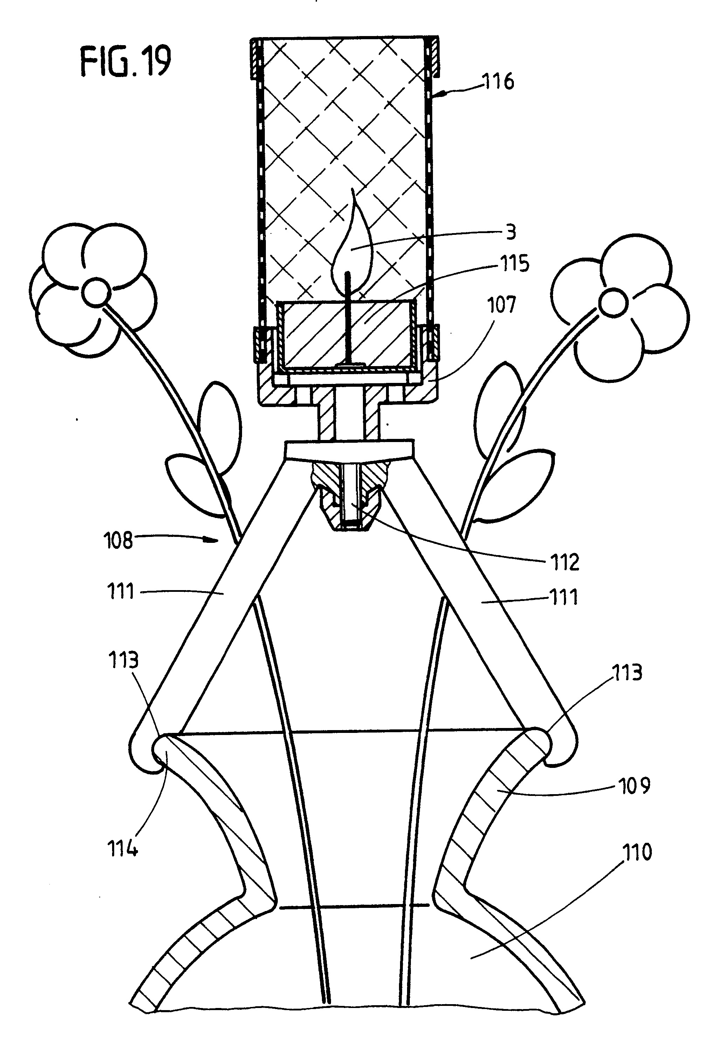

Bei der Ausführungsform gemäß Figur 19 ist am schalenförmigen Unterteil (107) der Leuchte ein klammerförmig verstellbarer Fuß (108) angeordnet, der zum Anbringen der Leuchte am Hals (109) einer Vase (110) dient. Der Fuß (108) weist drei um horizontale Achsen einzeln schwenkbar aufgehängte Arme (111) auf, die mittels einer drehbaren Stellspindel (112) nach innen bzw. außen verschwenkt werden können, um bei Bedarf mittels am äußeren Ende vorgesehenen Ausnehmungen (113) das äußere Ende (114) des Halses (109) der Vase (110) formschlüssig erfassen zu können. Es ist erkennbar, daß zwischen dem oberen Ende (114) des Halses (109) der Vase (110) und dem als Halter dienenden Unterteil (107) der Leuchte ausreichend Platz verbleibt, um Blumen in die Vase einstecken zu können, so daß die Leuchte sozusagen als Mittelpunkt oder Zentrum eines Blumenstraußes dienen kann.

Die Leuchte enthält als Lichtquelle ein Teelicht (115), das mit offener Flamme (3) brennen kann. Das Teelicht ist in einer lösbar aufgesteckten zylindrischen Hülle (116) untergebracht, welche ähnlich wie die Hüllen der vorstehend beschriebenen Ausführungsformen ausgebildet und aufgebaut ist.

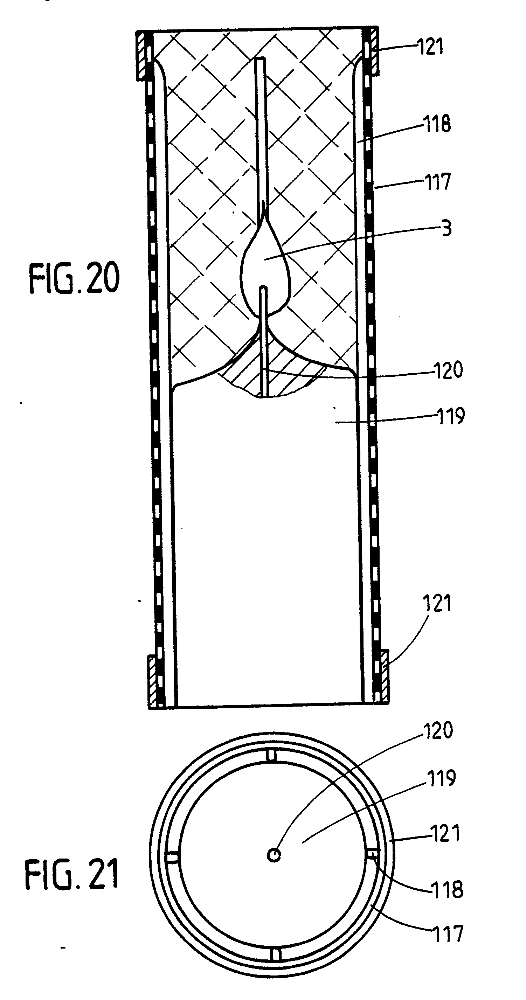

Bei der Ausführungsform gemäß Figur 20 und 21 enthält die zylindrische Hülle (117) über ihre gesamte Länge verlaufende Rippen (118), die aus feuerfestem Material bestehen und zum Zentrieren einer langen Kerze (119) mit zentralem Docht (120) dienen. Am oberen und unteren Ende der wiederum mit einem gitter- oder maschenartigen Mantel versehenen Hülle befinden sich Abschlußringe (121). Diese Ausführungsform ist besonders für Kirchenkerzen geeignet, die sehr lang sind und dementsprechend auch lange brennen.

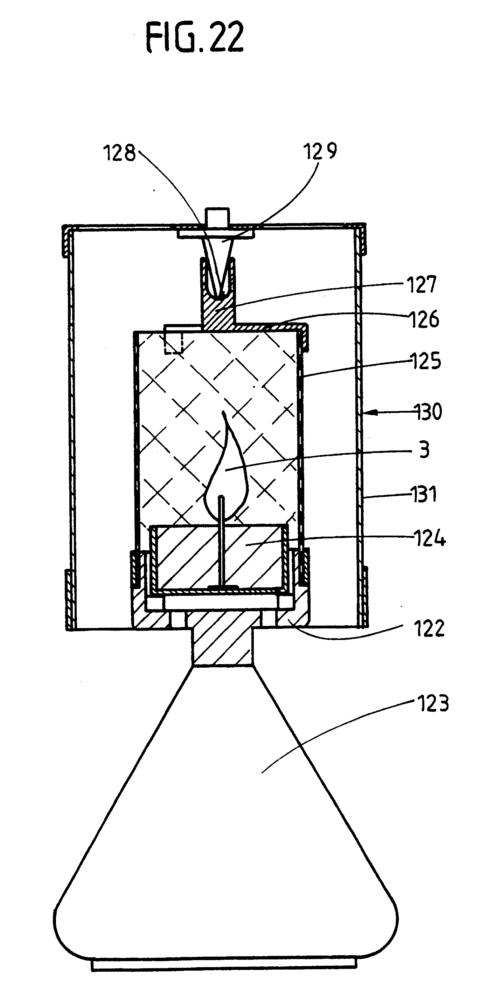

Bei der Ausführungsform gemäß Figur 22 ist ein schalenförmiges Unterteil (122) der Leuchte mit einem vasenartigen Fuß (123) versehen. In das Unterteil (122) ist als Lichtquelle ein Teelicht (124) eingesteckt, das mit offener Flamme (3) brennen kann.

Auf das Unterteil (122) ist lösbar eine zylindrische Hülle (125) aufgesteckt, die aus einem einfachen Stützgestell bestehen kann. Auf diese Hülle (125) ist ein beispielsweise als Dreifuß ausgebildeter Aufsatz (126) aufgesteckt, der einen zentralen Zapfen (127) trägt, welcher am oberen Ende eine Lagerkalotte (128) aufweist.

In das die Lagerkalotte (128) enthaltende obere pfannenartige Ende des Zapfens (127) ist ein Lagerstift (129) eingesteckt, der als Gegenlager dient und eine zylindrische Hülle (130) drehbar abstützt, deren Mantel (131) aus versteiftem gitterartigen oder maschenartigen Material besteht, das flammfest und unbrennbar ausgerüstet ist. Die Hülle (130) kann dekorative Motive tragen bzw. mit derartigen Motiven versehen sein.

## Ansprüche

1. Leuchte, insbesondere Tischleuchte, mit einem Halter, mit einer an diesem angebrachten Lichtquelle und mit einem Schirm für die Lichtquelle, **dadurch gekennzeichnet,** daß der Schirm eine lösbar auf den Halter aufsetzbare, die mit offener Flamme brennende Lichtquelle umschließende Hülle mit einer zahlreiche Öffnungen enthaltenden aus Fadenmaterial - beispielsweise Glasseide oder Glaswolle - gewirkten, gehäkelten, geflochtenen oder gewebten Wand ist, die mit flammfestem und hochtemperaturbeständigem Material versteift ist, wobei Öffnungen auf der gesamten Länge bzw. Höhe der Hülle vorgesehen sind.

2. Leuchte nach Anspruch 1, dadurch gekennzeichnet, daß die Wand der Hülle aus einem aus flammfest ausgerüstetem Fadenmaterial gebildeten Gitter oder Netz besteht.

3. Leuchte nach Anspruch 1 oder 2, dadurch gekennzeichnet, daß das Fadenmaterial der Wand der Hülle farbig ausgerüstet ist.

4. Leuchte nach einem der Ansprüche 1 bis 3, dadurch gekennzeichnet, daß die Wand der Hülle zwischen ihrem oberen und ihrem unteren Ende mit wenigstens einer windundurchlässigen umlaufenden Abdeckung versehen ist, die verschiebbar angeordnet sein kann.

5. Leuchte nach einem der Ansprüche 1 bis 4, dadurch gekennzeichnet, daß wenigstens am oberen Ende der Hülle eine ringförmige Fassung vorgesehen ist, an der Aufsätze oder Aufbauten angebracht werden können.

6. Leuchte nach einem der Ansprüche 1 bis 5, dadurch gekennzeichnet, daß der Halter mit Auflagen für im Grundriß kreisförmige Lichtquellen unterschiedlicher Durchmesser versehen ist.

7. Leuchte nach einem der Ansprüche 1 bis 6, dadurch gekennzeichnet, daß innerhalb der Hülle rippenförmige Distanzelemente zwischen der Hülle und der auswechselbar in dieser angeordneten kerzenartigen Lichtquelle vorgesehen sind.

8. Leuchte nach einem der Ansprüche 1 bis 7, dadurch gekennzeichnet, daß die Hülle im Grundriß in Form von gleichmäßigen oder ungleichmäßigen geometrischen Figuren, beispielsweise kreisförmig, vieleckig oder sternförmig, ausgebildet ist.

9. Leuchte nach einem der Ansprüche 1 bis 8, dadurch gekennzeichnet, daß im Halter unter und/oder neben der Lichtquelle ein Hohlraum zur Aufnahme von herabtropfendem Wachs vorgesehen ist.

10. Leuchte nach einem der Ansprüche 1 bis 9, dadurch gekennzeichnet, daß die Lichtquelle ein Teelicht mit einer Schale am unteren Ende und mit wenigstens einem am oberen Ende des Wachskörpers auf der Manteloberfläche derselben angeordneten, die brennende Flamme wenigstens in deren unteren Bereich seitlich abdeckenden zylinderförmigen Abdeckring, der mit zunehmendem Abbrand des Wachskörpers in Richtung zur unteren Schale auf dem Wachskörper absinkt und in die Schale von oben hineinpaßt, ist.

11. Leuchte nach einem der Ansprüche 1 bis 10, dadurch gekennzeichnet, daß der Halter an der Unterseite mit einer gelenkig angeordneten Klammer, ggfs. mit einer Einstecknadel kombiniert, versehen und daß auf der Hülle eine Austrittsöffnungen enthaltene Abdeckung anzubringen ist.

12. Leuchte nach einem der Ansprüche 1 bis 10, dadurch gekennzeichnet, daß der Halter mit einem verschwenkbare Arme aufweisenden Fuß zum lösbaren Aufsetzen auf den Hals einer Vase wie einer Blumenvase versehen ist.

EP 0 381 006 A2

FIG.1

FIG.3

FIG.2

FIG.4

FIG.5

FIG.7

FIG.6

FIG.8

FIG.9

FIG.11

FIG.10

FIG.12

# FIG.13

61
60
62
59
3
53
54
XIV
63
61
55
57 56 58 57 56

# FIG. 14

56 57
58
55
53
54
59
79

# FIG.15

68
66
71
69
3
64
65
XVI
67
70
68
73 77 78 76 72 74
75

# FIG. 16

64
80
65
76
78

**FIG. 17**

FIG.18

FIG.19

FIG.20

FIG. 21

# FIG.22